# EUROPÄISCHE PATENTSCHRIFT

(11) **EP 2 976 277 B1**
(45) Veröffentlichungstag und Bekanntmachung des Hinweises auf die Patenterteilung: **31.08.2016**
(21) Anmeldenummer: 14715856.2
(22) Anmeldetag: 17.03.2014
(51) Int. Cl.: B65G 47/82, B65B 43/00, B07C 5/34

(54) **VERFAHREN UND VORRICHTUNG ZUM ABTRANSPORTIEREN VON PACKUNGSBEHÄLTERN**
METHOD AND DEVICE FOR TRANSPORTING PACKAGING CONTAINERS
PROCÉDÉ ET DISPOSITIF POUR TRANSPORTER DES RÉCIPIENTS D'EMBALLAGE

(30) Priorität: 20.03.2013 DE 102013102843
(43) Veröffentlichungstag der Anmeldung: 27.01.2016
(73) Patentinhaber: Elopak AS, 3431 Spikkestad (NO)
(72) Erfinder: BALTES, Klaus, 50127 Bergheim (DE)
(74) Vertreter: Kohlmann, Kai
(86) Internationale Anmeldenummer: PCT/EP2014/055301
(87) Internationale Veröffentlichungsnummer: WO 2014/147022

(56) Entgegenhaltungen:
- EP-A1- 1 223 107
- EP-A2- 0 387 487
- WO-A1-02/36467

## Beschreibung

Die Erfindung betrifft ein Verfahren zum Abtransportieren von Packungsbehältern aus einer Füllmaschine für flüssiges Füllgut sowie eine Vorrichtung nach dem Oberbegriff des Anspruchs 5.

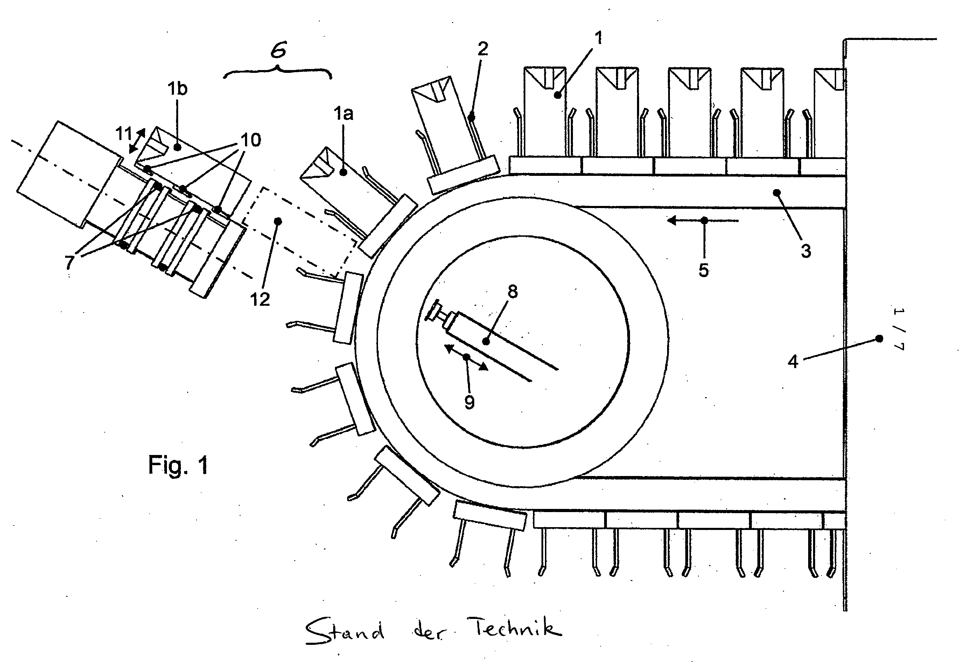

In Fig. 1 ist eine Vorrichtung zum Abtransportieren der in einer Füllmaschine (4) befüllten Packungsbehälter (1) aus Verbundstoffen für Getränke und flüssige Nahrungsmittel zu einer nicht dargestellten Abpackeinrichtung schematisch dargestellt. Eine zwischen zwei Umlenkungen umlaufende Zellenkette (3) ist das Tragorgan eines ersten Fördermittels, wobei die aufrecht stehenden, gefüllten und geschlossenen Packungsbehälter (1) in den Zellen (2) der Zellenkette (3) gehalten werden. Mit Hilfe der Zellenkette (3) werden die Packungsbehälter (1) taktweise in Förderrichtung (5) zu einer Übergabeposition (6) im Bereich der Umlenkung der Zellenkette (3) gefördert. Die Übergabeposition (6) im Bereich der Umlenkung befindet sich unterhalb der durch den Obertrum der Zellenkette (3) definierten Förderebene. In der Übergabeposition werden die Packungsbehälter (1a) an ein zweites Fördermittel übergeben, das zwei parallel zueinander umlaufende Transportbänder (7) aufweist. Bei der Übergabe wird jeder Packungsbehälter (1a) in einer Schräglage von etwa 30° gegenüber den Horizontalen in der Ausstoßstellung (12) liegend durch einen getakteten Ausstoßer (8) in Richtung des Pfeils (9) von unten aus der jeweiligen Zelle (2) hinaus ausgestoßen. Der ausgestoßene Packungsbehälter (1a) landet auf absenkbaren Leisten (10), die wiederum den schräg liegenden Packungsbehälter (1b) auf die quer zur Förderrichtung (5) kontinuierlich bewegten Transportbänder (7) nach der Abwärtsbewegung in Richtung des Pfeils (11) abgelegen, wodurch jeder Packungsbehälter (1b) querab zur Förderrichtung (5) abtransportiert wird. Sobald der Packungsbehälter (1) auf den Transportbändern (7) abtransportiert ist, wird der nächste Packungsbehälter (1a) in die Ausstoßstellung (12) bewegt. Inzwischen wurden die Leisten (10) entsprechend dem Pfeil (11) wieder in ihre Ausgangsposition bewegt, um den nächsten auszustoßenden Packungsbehälter (1b) aufnehmen zu können. Nun stößt der getaktete Ausstoßer (8) in Richtung des Pfeils (9) den nächsten Packungsmantel (1a) aus.

Nachteilig an dieser Ausführung ist, dass im Falle von nicht oder nicht einwandfrei verschlossenen Packungsbehältern (1a, 1b) das flüssige Füllgut zumindest teilweise ausläuft und in der Übergabeposition (6), insbesondere die Leisten (10) und die Transportbänder (7) verschmutzt. Eine an dieser Stelle ständig anwesende Bedienungsperson muss zunächst die Füllmaschine (4) anhalten, um den fehlerhaften Packungsbehälter (1a, 1b) zu entfernen und um die verschmutzten Maschinenteile zu reinigen. Da die Maschine nur mit Verzögerung angehalten werden kann, werden auch die unmittelbar nachfolgenden Packungsbehälter (1a,b) durch die Leisten (10) und Transportbänder (7) verunreinigt. Dass heißt, dass auch diese Packungsbehälter (1a, 1b) entnommen werden müssen. Die Reinigung der Maschine ist also auch schon aus diesem Grunde unbedingt erforderlich, damit die nach Wiederinbetriebnahme der Füllmaschine (4) nachfolgenden Packungsbehälter (1a, 1b) nicht verschmutzt werden. Aus einem weiteren Grunde ist die Bedienungsperson im Bereich des Abtransports ständig erforderlich, weil nicht nur die nicht ordnungsgemäß verschlossenen sondern auch die schadhaften (z. B. fehlender Ausgießer usw.) Packungsbehälter von Hand von dem zweiten Fördermittel entfernt werden müssen.

Aus der JP 2001 - 187 632 A ist ein Fördersystem für den Vertikaltransport von Artikeln von einem Untergeschoss zu einem Obergeschoss eines Lagers bkannt. Das Fördersystem umfasst ein erstes Fördermittel für die Artikel in einer ersten, unteren Förderebene. Das erste Fördermittel ist als umlaufender Duplex-Bandförderer ausgebildet. Am Ende des Förderweges des ersten Fördermittels befindet sich eine Hubvorrichtung zwischen den beiden Bändern des Duplexförderers zum Anheben der Artikel in Richtung eines Vertikalförderers für die Artikel. Der Vertikalförderer umfasst paarweise parallel und im Abstand zueinander angeordnete vertikal laufende Bänder, zwischen denen die Artikel für den Vertikaltransport eingeklemmt werden. Am Ende des Vertikaltransportweges befindet sich in einer Abtransportebene ein zweites Fördermittel in Form eines umlaufenden Bandförderers. Um die Artikel am Ende des Vertikaltransports an das zweite Fördermittel störungsfrei zu übergeben, befindet sich am Ende des Vertikaltransports ein Greifförderer mit gegeneinander beweglichen Rollengruppen zum Erfassen und Übergeben der Artikel in Richtung des zweiten Fördermittels.

Die GB 1 208 965 A offenbart ein Fördersystem mit einer senkrechten Führungsschiene, an der ein Träger nach Art eines Aufzugs vertikal verfahrbar ist. Der Träger umfasst einen horizontal angeordneten Bandförderer, der in verschiedenen Horizontalebenen entlang der Führungsschiene fluchtend zu dort angeordneten Bandförderern ausgerichtet werden kann. Eine Vorrichtung gemäß dem Oberbegriff des Anspruchs 5 ist aus der EP 0 387 487 A2 bekannt. Sie offenbart eine Montagelinie einer Montagemaschine mit mehreren Förderern in einer Arbeitsebene und mehreren Förderern in einer Rückführebene. Die einzelnen Werkstücke werden auf den Förderern auf Paletten transportiert. Um die Paletten von der Arbeitsebene in die Rückführebene und umgekehrt zu bewegen, ist angrenzend an die Förderer in den Förderebenen ein Lift aufgestellt, der einen vertikal verfahrbaren Schlitten aufweist. Auf dem Schlitten befindet sich ebenfalls ein umlaufender Förderer. Angrenzend an den Förderer des Schlittens sind in beiden Ebenen Übergabestationen angeordnet, um die Paletten an die Förderer in den unterschiedlichen Ebenen zu übergeben. Jede Übergabestation besteht aus einem kurzen Duplex-Förderer, der um eine Vertikalachse schwenkbar ist, so dass seine Förderrichtung entweder mit der Richtung des Hauptförderers oder derjenigen des angrenzenden Seitenförderers in beiden Förderebenen übereinstimmt.

Ausgehend von diesem Stand der Technik liegt der Erfindung die Aufgabe zu Grunde, ein Verfahren anzugeben, bei dem eine Verschmutzung von Maschinenteilen durch nicht einwandfrei verschlossene Packungsbehälter vermieden und eine automatisierte Aussortierung nicht einwandfrei verschlossener oder anderweit schadhafter Packungsbehälter ermöglicht wird. Des Weiteren soll eine Vorrichtung zur Durchführung des Verfahrens angegeben werden.

Diese Aufgabe wird bei einem Verfahren zum Abtransportieren von Packungsbehältern aus einer Füllmaschine für flüssiges Füllgut durch die nachfolgenden Schritte gelöst:
- taktweises Fördern der Packungsbehälter in einer Förderrichtung mit einem zwischen zwei Umlenkungen in einer Förderebene umlaufenden Tragorgan mindestens eines ersten Fördermittels,
- Anheben der Packungsbehälter an einer zwischen den Umlenkungen angeordneten Übergabeposition aus der Förderebene in eine oberhalb der Förderebene liegende Abtransportebene während des Stillstands des ersten Fördermittels,
- Übergeben der Packungsbehälter an mindestens ein zweites Fördermittel während des Stillstands jedes zweiten Fördermittels und
- Fördern der Packungsbehälter in der Abtransportebene in eine von zwei entgegengesetzt verlaufenden Abtransportrichtungen jedes zweiten Fördermittels, die quer zur Förderrichtung (25) jedes ernsten Fördermittels verlaufen.

Durch das Verlagern der Übergabeposition zwischen die Umlenkungen des Tragorgans sowie das Anheben aus der tiefer liegenden Förderebene in eine oberhalb der Förderebene liegende Abtransportebene, kann der Packungsbehälter auch während des Abtransports in einer aufrecht stehenden Position verbleiben, so dass während des Abtransports kein flüssiges Füllgut aus nicht einwandfrei verschlossenen Packungsbehältern überschwappt und die Füllmaschine verunreinigt.

Das Anheben der Packungsbehälter während des Stillstands des ersten Fördermittels und dessen Übergabe an das zweite Fördermittel während des Stillstands des zweiten Fördermittels trägt dazu bei, dass aus nicht einwandfrei verschlossenen Packungsbehältern kein flüssiges Füllgut austritt. Eine Abschaltung der gesamten Füllmaschine wird vermieden, weil keine Verschmutzung der Füllmaschine durch nicht einwandfrei verschlossene Packungsbehälter eintritt.

Indem die Packungsbehälter in der Abtransportebene in eine von zwei entgegengesetzt verlaufenden Abtransportrichtungen jedes zweiten Fördermittels gefördert werden, können die nicht einwandfrei verschlossenen oder die anderweit schadhaften Packungsbehälter automatisiert aussortiert werden, indem diese in entgegengesetzter Richtung zur Abtransportrichtung der einwandfreien Packungsbehälter abtransportiert werden. In Folge dessen ist eine zusätzliche Bedienperson für die Füllmaschine im Bereich des Abtransports nicht mehr erforderlich.

Um jedwede Neigung des Packungsbehälters gegenüber der horizontalen Förderebene während des Anheben, in die Abtransportebene zu vermeiden, werden die Packungsbehälter vorzugsweise in senkrechter Richtung zu der Förderebene angehoben.

Das Anheben der Packungsbehälter erfolgt mittels einer Hubvorrichtung, die vorzugsweise mindestens einen zwischen der Förder- und Abtransportebene hin- und herbeweglichen Stößel aufweist, der an einer Bodenfläche des Packungsbehälters zur Anlage bringbar ist. Sofern als Tragorgan des ersten Fördermittels eine übliche und an sich bekannte Zellenkette zum Einsatz gelangt, ist der Stößel der Hubvorrichtung durch eine Durchtrittsöffnung in jeder Zelle zur Wirkung bringbar. Die vorzugsweise am Boden der Zelle angeordnete Durchtrittsöffnung fluchtet mit einer Durchtrittsöffnung in dem Tragorgan, so dass der Stößel während des Stillstands des ersten Fördermittels durch das Tragorgan und den Boden der Zelle auf die Bodenfläche des Packungsbehälters einwirken kann.

Zum Übergeben der Packungsbehälter an das zweite Fördermittel wird eine Bodenfläche jedes Packungsbehälters nach dem Anheben in die Abtransportebene zeitweilig mittels einer von der Hubvorrichtung verschiedenen Stützvorrichtung gegen ein Absacken gestützt. Vorzugsweise wird die Bodenfläche jedes Packungsbehälters solange von der Stützvorrichtung gestützt, bis die Bodenfläche durch das Fördern der Packungsbehälter in der Abtransportebene auf eine tragende Oberfläche der Abtransportebene gelangt.

Als tragende Oberfläche in der Abtransportebene sind vorzugsweise Gleitflächen vorgesehen, die sich in die beiden Abtransportrichtungen erstrecken. Zwischen den Gleitflächen befindet sich vorzugsweise in lotrechter Richtung oberhalb der Übergabeposition eine Unterbrechung, deren Querschnitt so bemessen ist, dass durch die Unterbrechung jeder Packungsbehälter mit der Hubvorrichtung in die Abtransportebene hebbar ist. In dieser bevorzugten Ausgestaltung einer erfindungsgemäßen Vorrichtung zum Abtransportieren von Packungsbehältern weist die Stützvorrichtung mindestens ein in der Abtransportebene zwischen einer Ausgangsposition und einer Stützposition hin- und herbewegliches Tragteil auf, das den Packungsbehälter während der Übergabe an das zweite Fördermittel zeitweilig gegen ein Absacken stützt. In der Stützposition erstreckt sich das Tragteil in die Unterbrechung zwischen den Gleitflächen hinein, während es in der Ausgangsstellung die Unterbrechung für den ungehinderten Durchtritt jedes Packungsbehälters freigibt.

In einer bevorzugten Ausführungsform der Vorrichtung zum Abtransportieren von Packungsbehältern weist jedes zweite Fördermittel ein zwischen zwei Umlenkungen umlaufendes Tragorgan auf, an dem mehrere U-förmige Taschen zum formschlüssigen Erfassen der Packungsbehälter befestigt sind. Die freien Schenkel der U-förmigen Taschen verhindern eine Bewegung der Packungsbehälter in eine der beiden Abtransportrichtungen. Das umlaufende Tragorgan weist vorzugsweise zwei parallel und im Abstand zueinander umlaufende Bänder auf, die durch die jeweils an beiden Bändern befestigten Taschen miteinander gekoppelt sind. Die Umlenkräder drehen um senkrecht zur Abtransportebene rotierende Achsen, so dass die Bandoberflächen der umlaufenden Bänder senkrecht zur Abtransportebene stehen.

Nachfolgend wird die Erfindung anhand der Figuren näher erläutert. Es zeigen:
- **Figur 2**: eine perspektivische Ansicht einer Vorrichtung zum Abtransportieren von Packungsbehältern aus einer Füllmaschine,
- **Figur 3a**: eine erste Detaildarstellung zur Veranschaulichung einer in der Abtransportebene wirksamen Stützvorrichtung einer in
- **Figur 3b**: dargestellten Abtransportvorrichtung nach Figur 2,
- **Figur 4a**: eine zweite Detaildarstellung zur Veranschaulichung der in der Abtransportebene wirksamen Stützvorrichtung einer in
- **Figur 4b**: dargestellten Abtransportvorrichtung nach Figur 2,
- **Figur 5**: eine Abtransportvorrichtung nach Figur 2, während des Abtransports einwandfreier Packungsbehälter,
- **Figur 6**: eine Abtransportvorrichtung nach Figur 2, während der Übergabe eines einwandfreien und eines nicht geschlossenen Packungsbehälters an das zweite Fördermittel sowie
- **Figur 7**: den Abtransport der nach Figur 6 übergebenen Packungsbehälter,
- **Figur 8**: eine perspektivische Ansicht eines zweiten Ausführungsbeispiels einer Vorrichtung zum Abtransportieren von Packungsbehältern aus einer Füllmaschine und
- **Figur 9**: eine Aufsicht auf die Abtransportvorrichtung nach Figur 8.

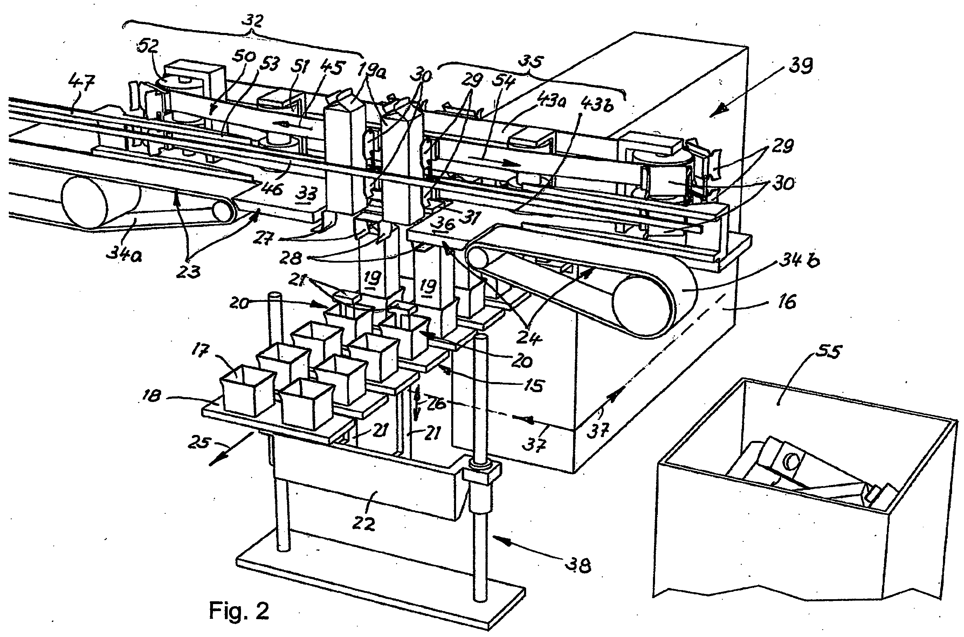

Fig. 2 zeigt, wie Packungsbehälter 19 aus einer Füllmaschine 16 in Förderrichtung 25 mittels eines als Kettenförderer 18 ausgestalteten ersten Fördermittels 15 in die Übergabeposition 20 gefördert werden. Die in einer Förderebene 37 umlaufende Kette als Tragorgan des Kettenförderers 18 ist mit Zellen 17 bestückt, die die Packungsbehälter 19 in aufrecht stehender Position aufnehmen.

In der Übergabeposition 20 werden während des Stillstands des intermittierend betriebenen ersten Fördermittels 15 die Packungsbehälter 19 mit Hilfe von Stößeln 21, die auf einem Ausschieberjoch 22 einer mit einem nicht dargestellten Antrieb versehenen Hubvorrichtung 38 angeordnet sind, aus den Zellen 17 entsprechend dem Doppelpfeil 26 aus der Förderebene 37 in eine oberhalb liegende Abtransportebene 23, 24 angehoben. Dabei werden die Packungsbehälter 19 durch Führungen 27, 28 hindurch in U-förmige Taschen 29, 30 eines zweiten, ebenfalls intermittierend betriebenen Fördermittels 39 geschoben, während dieses stillsteht.

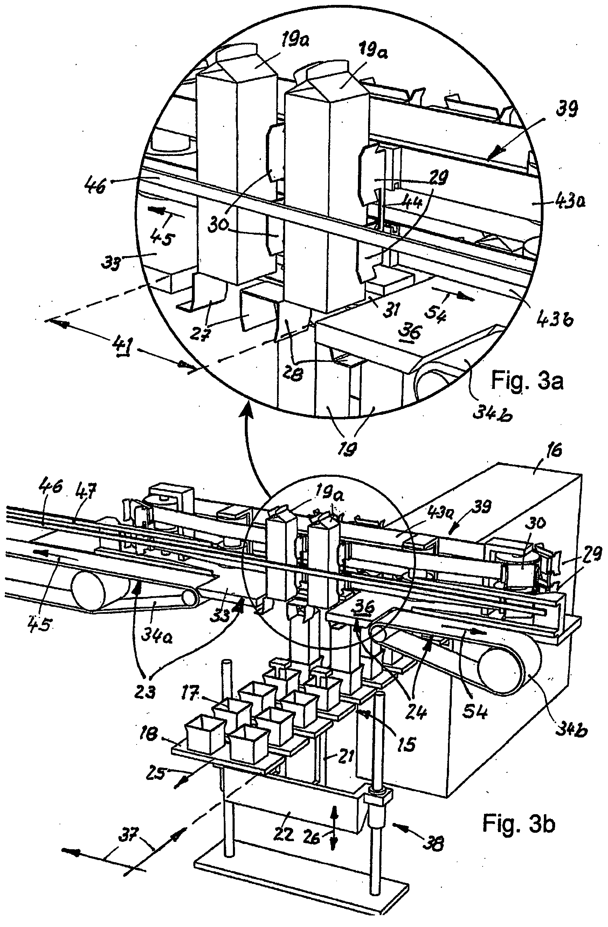

In Fig. 3a sind die U-förmigen Taschen 29, 30 des zweiten Fördermittels 39 und Teile der Abtransportebene 23, 24 in vergrößertem Maßstab dargestellt. Die Taschen 29, 30 des zweiten Fördermittels 39 sind auf einem parallel verlaufenden, übereinander angeordneten Doppelband 43a, 43b montiert. Dabei sind die Taschen 29, 30 jeweils einstückig ausgebildet und bestehen aus einem gleichartigen oberen und unteren Teil, die durch einen Steg 44 miteinander verbunden sind. Die beiden Bänder 43a, 43b des Doppelbandes 43a, 43b sind durch den Steg 44 jeder Tasche 29, 30 aneinander gekoppelt und laufen dadurch synchron. Die Anzahl der Taschen 29, 30 des zweiten Fördermittels 39 sind in diesem Ausführungsbeispiel zum Einen auf den zweibahnigen Kettenförderer 18 und zum Anderen auf den Takt der Füllmaschine 16 abgestimmt, mit dem der Kettenförderer 18 die Packungsbehälter 19 fördert. In diesem Falle sind vier Taschenpaare 29, 30 in gleichen Abständen auf dem Doppelband 43a, 43b des zweiten Fördermittels 39 angeordnet (vgl. Figur 3b).

In der Abtransportebene 23, 24 sind als Platten ausgebildete Gleitflächen 33, 36 angeordnet, die sich in die beiden Abtransportrichtungen 45, 54 erstrecken. Zwischen den Gleitflächen 33, 36 befindet sich eine Unterbrechung 41, durch die jeder Packungsbehälter 19a geführt durch die Führungen 27, 28 mit der Hubvorrichtung 38 in die Abtransportebene 23, 24 hebbar ist. Die Abtransportebene 23 auf der Gutseite 32 (vgl. Figur 2) wird von der Gleitflächen 33 und einem in Abtransportrichtung 45 an die Gleitfläche 33 anschließenden Abtransportband 34a gebildet. Die Abtransportebene 24 auf der Ausschuss-Seite 35 (vgl. Figur 2) wird von der Gleitfläche 36 und einem in Abtransportrichtung 54 an die Gleitfläche 36 anschließenden Abtransportband 34b gebildet.

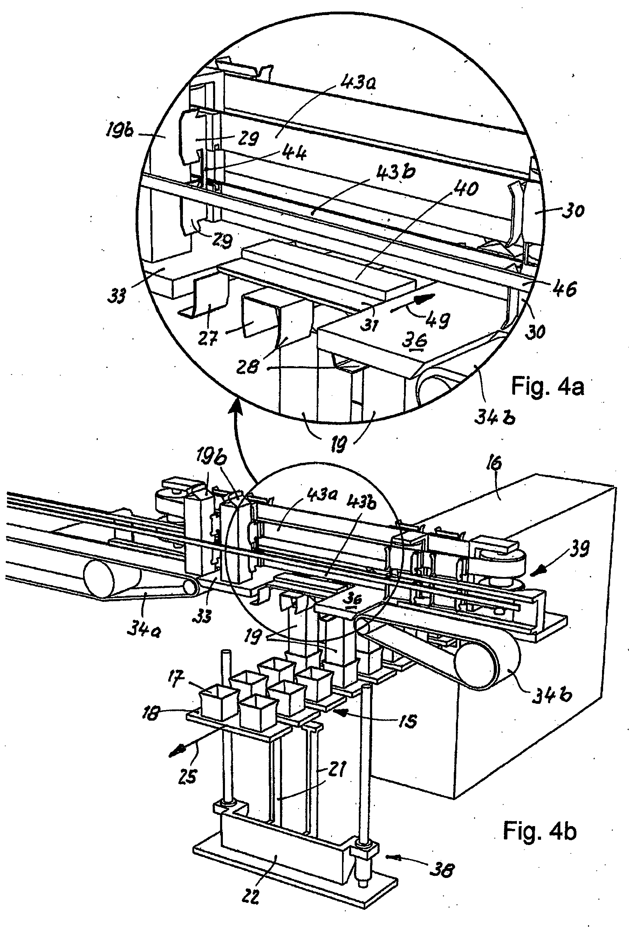

Zum Übergeben der Packungsbehälter 19a an das zweite, stillstehende Fördermittel 39 wird eine Bodenfläche jedes Packungsbehälters 19a nach dem Anheben in die Abtransportebene 23, 24 zeitweilig mittels einer von der Hubvorrichtung 38 verschiedenen Stützvorrichtung 40 (vgl. Figur 4a) gegen ein Absacken gestützt. Die Stützvorrichtung 40 weist ein in der Abtransportebene 23, 24 zwischen einer Ausgangsposition und einer Stützposition hin- und herbewegliches Tragteil 31 in Form eines plattenförmigen Schiebers auf. Der plattenförmiger Schieber wird aus der Ausgangsposition von der Seite, parallel zur Förderrichtung 25 des Kettenförderers 18, in die Stützposition von einem nicht dargestellten Antrieb bewegt und dabei unter die Bodenfläche des Packungsbehälters 19a geschoben (Fig. 3a). Danach wird das Ausschieberjoch 22 mit den Stößeln 21, entsprechend dem Doppelpfeil 26, wieder nach unten bewegt.

Durch die in vertikaler Richtung langgestreckten Taschen 29, 30 werden die verhältnismäßig hohen Packungsbehälter 19a in einer stabilen aufrechten Haltung formschlüssig erfasst. Soweit die Packungsbehälter 19a nicht schadhaft sind, werden sie über die Gleitfläche 33 in die Abtransportrichtung 45 zur Gutseite 32 abtransportiert. Das zweite Fördermittel 39 schiebt dabei die Packungsbehälter 19a von der Gleitfläche 33 auf das Abtransportband 34, welches synchron zu dem zweiten Fördermittel 39 bewegt wird. Damit die Packungsbehälter 19b während des Abtransports nicht seitlich von der Platte 33 und dem Abtransportband 34 herunter geschoben werden bzw. fallen können, ist gegenüber dem zweiten Fördermittel 39 eine Führungsleiste 46 angeordnet, die sich über die gesamte Länge der Unterbrechung 41 sowie der Abtransportebene 23, 24 auf der Gutseite 32 und der Ausschussseite 35 erstreckt. Gegenüber der Führungsleiste 46 ist auf der Gutseite 32 eine weitere Führungsleiste 47 angeordnet, die als Verlängerung einer Ausschleuseschiene 53 ausgebildet ist. Damit das Ausschleusen der Packungsbehälter 19a so wenig Unruhe wie möglich beim Abtransport erzeugt, ist die Ausschleuseschiene 53 zwischen dem oberen Band 43 a und dem unteren Band 43 b angeordnet und erstreckt sich zwischen den Umlenkrollen 51, 52 des Doppelbandes 43a, 43b.

In den Figuren 3a, 3b, 4a, 4b, 5 ist der Abtransport von ordnungsgemäß gefüllten und verschlossenen Packungsbehältern 19a,b in zwei Schritten anschaulich dargestellt. Figur 4b zeigt die Packungsbehälter 19b beim Übergang von der Gleitfläche 33 auf das nachgeordnete Abtransportband 34. Das Tragteil 31 befindet sich kurz vor dem Verschieben in Richtung des Pfeils 49 in die Ausgangsstellung. Sobald sich das Tragteil 31 wieder in die Ausgangsstellung befindet, kann durch die Unterbrechung 41 der nächste Packungsbehälter 19 mit den Stößeln 21 in die Abtransportebene 23, 24 angehoben und dort an das stillstehende zweite Fördermittel (39) übergeben werden (Figuren 3a, 3b).

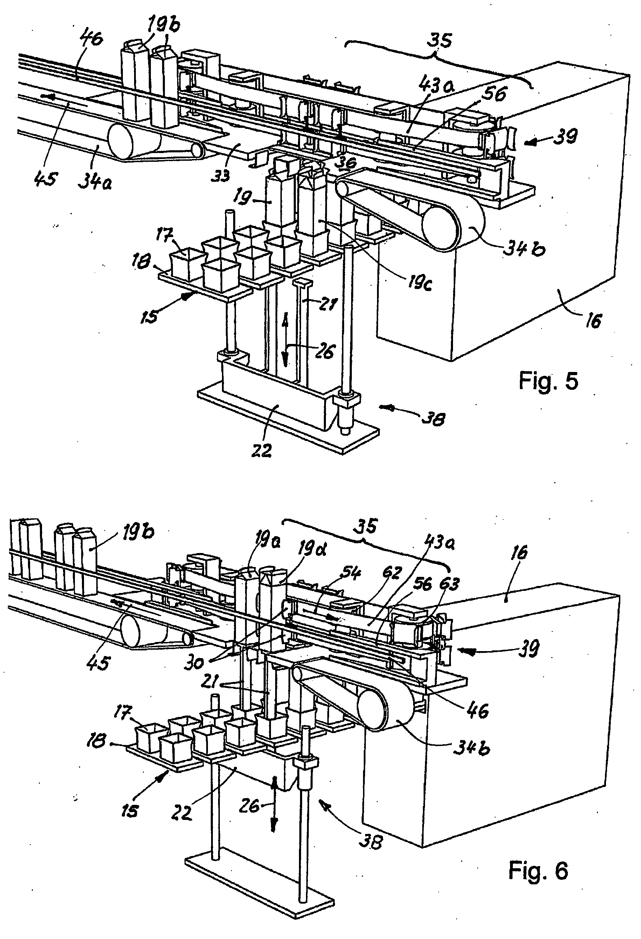

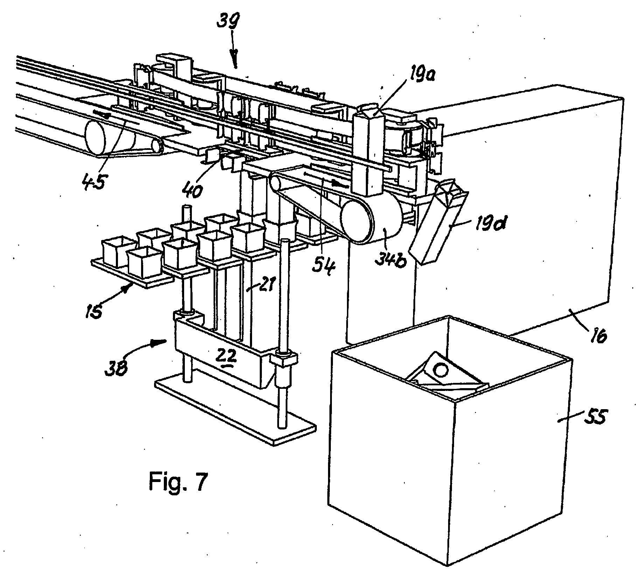

Es ist nicht auszuschließen, dass es in der Füllmaschine 16 zu Fehlfunktionen kommt, so dass u. U. ein Packungsbehälter 19c entweder nicht korrekt gefüllt, oder nicht einwandfrei verschlossen wird. Weiterhin ist es möglich, dass ein Ausgießer fehlt oder andere Mängel an dem Verpackungsbehälter 19c vorliegen, die automatisch in der Füllmaschine 16 festgestellt werden. Diese schadhaften Packungsbehälter 19c dürfen aus verschieden Gründen nicht in den Handel gelangen. Deshalb müssen schadhafte Packungsbehälter 19c aussortiert werden. In den Figuren 5, 6 und 7 ist das Aussortieren des schadhaften Packungsbehälter 19c dargestellt.

In Fig. 5 befindet sich in einer der Zellen 17 des Kettenförderers 18 der schadhafte Packungsbehälter 19c, der nicht verschlossen worden ist, unter der Führung 28, während sich der ordnungsgemäß verschlossene benachbarte Packungsbehälter 19 unter der Führung 27 befindet. Figur 6 zeigt die beiden Packungsbehälter 19a u. 19d nach dem geführten Anheben in die Abtransportebene 23, 24. Aufgrund der in der Füllmaschine 16 sensorisch festgestellten Mängel an dem Packungsbehälter 19c wird der angehobene schadhafte Packungsbehälter 19d, den die Tasche 30 formschlüssig aufgenommen hat, nach einer Richtungsumschaltung des Antriebs des zweiten Fördermittels 39 in die zur Abtransportrichtung 45 entgegengesetzte Abtransportrichtung 54 zur Ausschussseite 35 transportiert. Mittels der paarweise an dem Doppelband 43a, 43b angeordneten Taschen 29, 30 wird der benachbarte einwandfreie Packungsbehälter 19a zwangsläufig gemeinsam mit dem schadhaften Packungsbehälter 19d auf der Ausschussseite 35 in einen Behälter 55 für Ausschuss gefördert. Das Ausschleusen der beiden Packungsbehälter 19a,d aus den Taschen 29, 30 erfolgt mit einer weiteren Ausschleuseschiene 56, die sich zwischen den Umlenkrollen 62, 63 des Doppelbandes 43a, 43b erstreckt und zwischen dem oberen Band 43a und dem unteren Band 43 b des Doppelbandes 43a,b angeordnet ist.

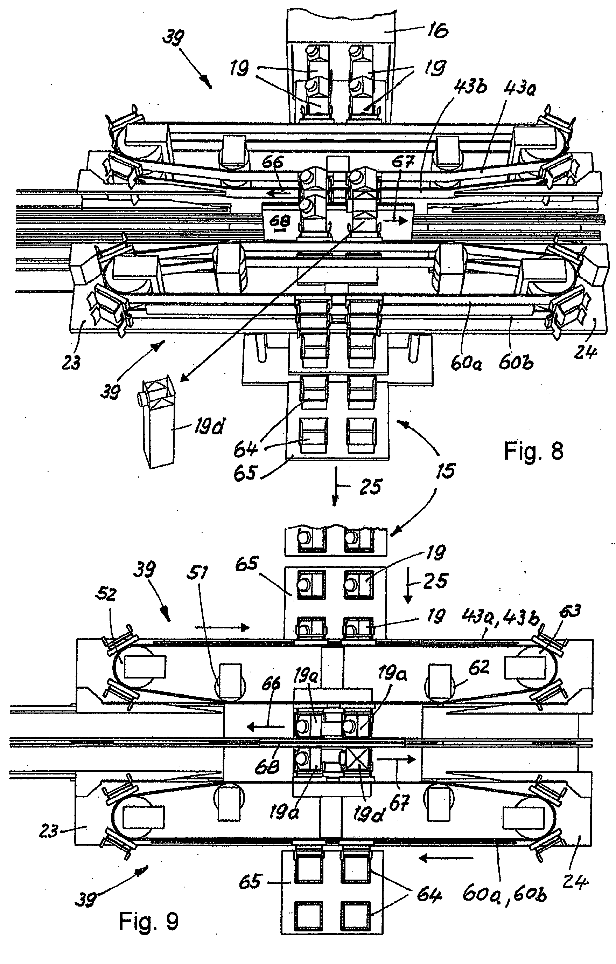

In den Figuren 8 und 9 ist ein weiteres Ausführungsbeispiel einer Vorrichtung zum Abtransportieren von Packungsbehältern dargestellt, in welchem nicht, wie oben erläutert, zwei Packungsbehälter 19 aus der Förderebene 37 des ersten Fördermittels in die Abtransportebene 23,24 angehoben werden, sondern gleichzeitig vier Packungsbehälter 19 aus der Förderebene 37 in die Abtransportebene 23,24 angehoben werden. Jedes erste Fördermittel 15 weist auf einem Kettenglied 65 der Kette zwei Doppelzellen 64 auf, deren beiden Zellen in Förderrichtung 25 hintereinander zwei Packungsbehälter 19 aufnehmen. In der Abtransportebene 23, 24 sind zum gleichzeitigen Abtransport von vier Packungsbehältern 19 zwei übereinstimmend aufgebaute zweite Fördermittel 39 angeordnet. Das umlaufende Doppelband 60a, 60b ist spiegelbildlich gegenüber dem ersten Doppelband 43a, 43b angeordnet. Die Funktion der beiden Doppelbänder 43a, 43b und 60a, 60b stimmt mit der Funktion der Doppelbänder 43a, 43b in den Fig. 1 bis 7 überein. Zur Trennung der vier Packungsbehälter 19a, 19d ist zwischen den Doppelbändern 43a, 43b und den Doppelbändern 60a, 60b eine Trennplatte 68 vorgesehen, die einen ungestörten und geführten Abtransport sämtlicher Packungsbehälter 19a, 19d in übereinstimmender Abtransportrichtung 66 oder entgegengesetzter Richtung 66, 67 mit den beiden Fördermitteln 39 ermöglicht.

In der Arbeitsweise ergibt sich insoweit ein Unterschied, dass wenn ein Packungsbehälter 19d der vier gleichzeitig angehobenen Packungsbehälter 19a, 19d schadhaft ist, gleichwohl die beiden ordnungsgemäß verschlossenen Packungsbehälter 19a, die sich im Bereich der Doppelbänder 43a, 43b befinden, zur Gutseite in die Abtransportrichtung 66 gefördert werden können. Unabhängig davon werden die Packungsbehälter 19d und 19a in die entgegengesetzte Abtransportrichtung 67 zur Ausschussseite transportiert.

Sofern auch einer der beiden Packungsbehälter 19a im Bereich der Doppelbänder 43a, 43b schadhaft sein sollte, werden alle vier Packungsbehälter gleichzeitig in die Abtransportrichtung 67 zur Ausschussseite transportiert. Im Normalfall, wenn alle Packungsbehälter 19a sich im ordnungsgemäßen Zustand befinden, werden alle Packungsbehälter 19a in die Abtransportrichtung 66 zur Gutseite abtransportiert.

Die Doppelbänder 43a, 43b und die Doppelbänder 60a, 60b fördern die Packungsbehälter 19a zeitversetzt in die Abtransportrichtung 66, wenn alle Packungsbehälter 19a zu einem einzigen Strang (nicht dargestellt) zusammengeführt werden sollen. Sofern die Packungsbehälter 19a als Doppelstrang zu einer Sammelstelle transportiert werden sollen, laufen beide Doppelbänder 43a, 43b und 60a, 60b gleichzeitig an und fördern alle Packungsbehälter 19a synchron in die Abtransportrichtung 66. Durch das Vorsehen der mindestens zwei zweiten Fördermittel 39 in der Abtransportebene 23, 24 kann die Abtransportleistung erheblich gesteigert werden.

Schließlich liegt es im Rahmen der Erfindung, nicht nur doppelbahnig mit dem ersten Fördermittel 15 geförderte Packungsbehälter 19 abzutransportieren, sondern auch in mehr als zwei Bahnen mit dem ersten Fördermittel 15 geförderte Packungsbehälter 19. Des Weiteren können zwei oder mehrere synchron betriebene erste Fördermittel 15 parallel zueinander angeordnet sein, um eine mehrbahnige Zufuhr von Packungsmänteln 19 in die Übergabeposition 20 zu bewirken.

**Bezugszeichenliste**

| **Nr.** | **Bezeichnung** | **Nr.** | **Bezeichnung** |
|---|---|---|---|
| 1 a-b | Packungsbehälter | 35 | Ausschussseite |
| 2 | Zellen | 36 | Gleitflächen |
| 3 | Zellenkette | 37 | Förderebene |
| 4 | Füllmaschine | 38 | Hubvorrichtung |
| 5 | Förderrichtung | 39 | zweites Fördermittel |
| 6 | Übergabeposition | 40 | Stützvorrichtung |
| 7 | Transportbänder | 41 | Unterbrechung |
| 8 | Ausstoßer | 42 | -- |
| 9 | Pfeil | 43 a-b | Doppelband |
| 10 | Leisten | 44 | Steg |
| 11 | Pfeil | 45 | Abtransportrichtung |
| 12 | Ausstoßstellung | 46 | Führungsleiste |
| 13,14 | -- | | |
| 15 | erstes Fördermittel | 47 | Führungsleiste |
| 16 | Füllmaschine | 49 | Pfeil |
| 17 | Zellen | 50 | Position |
| 18 | Kettenförderer | 51 | Umlenkrolle |
| 19 a-d | Packungsbehälter | 52 | Umlenkrolle |
| 20 | Übergabeposition | 53 | Ausschleuseschiene |
| 21 | Stößel | 54 | Abtransportrichtung |
| 22 | Ausschieberjoch | 55 | Behälter |
| 23 | Abtransport-Ebene | 56 | Ausschleuseschiene |
| 24 | Abtransport-Ebene | 60 a-b | Doppelband |
| 25 | Förderrichtung | 61 | -- |
| 26 | Doppelpfeil | 62 | Umlenkrolle |
| 27 | Führungen | 63 | Umlenkrolle |
| 28 | Führungen | 64 | Doppelzellen |
| 29 | Taschen | 65 | Kettenglied |
| 30 | Taschen | 66 | Abtransportrichtung |
| 31 | Tragteil | 67 | Abtransportrichtung |
| 32 | Gutseite | 68 | Trennplatte |
| 33 | Gleitflächen | | |
| 34 a-b | Abtransportband | | |

## Patentansprüche

1. Verfahren zum Abtransportieren von Packungsbehältern (19) aus einer Füllmaschine (16) für flüssiges Füllgut umfassend die Schritte:
- taktweises Fördern der Packungsbehälter (19) in einer Förderrichtung (25) mit einem zwischen zwei Umlenkungen in einer Förderebene (37) umlaufenden Tragorgan mindestens eines ersten Fördermittels (15),
- Anheben der Packungsbehälter (19) an einer zwischen den Umlenkungen (52,63) angeordneten Übergabeposition (20) aus der Förderebenen (37) in eine oberhalb der Förderebene (37) liegende Abtransportebene (23, 24) während des Stillstands des ersten Fördermittels (15),
- Übergeben der Packungsbehälter (19) an mindestens ein zweites Fördermittel (39) während des Stillstands jedes zweiten Fördermittels (39) und
- Fördern der Packungsbehälter (19) in der Abtransportebene (23, 24) in eine von zwei entgegengesetzt verlaufenden Abtransportrichtungen (45, 54) jedes zweiten Fördermittels (39), die quer zur Förderrichtung (25) jedes ersten Fördermittels (15) verlaufen.

2. Verfahren nach Anspruch 1, **dadurch gekennzeichnet, dass** die Packungsbehälter (19) in senkrechter Richtung zu der Förderebene (37) angehoben werden.

3. Verfahren nach Anspruch 1 oder 2, **dadurch gekennzeichnet, dass** das Anheben der Packungsbehälter (19) mittels einer Hubvorrichtung (38) erfolgt und zum Übergeben der Packungsbehälter (19) an das zweite Fördermittel (39) eine Bodenfläche jedes Packungsbehälters (19) nach dem Anheben in die Abtransportebene (23, 24) zeitweilig mittels einer von der Hubvorrichtung (38) verschiedenen Stützvorrichtung (40) gegen ein Absacken gestützt wird.

4. Verfahren nach Anspruch 3, **dadurch gekennzeichnet, dass** die Bodenfläche jedes Packungsbehälters (19) solange von der Stützvorrichtung (40) gestützt wird, bis die Bodenfläche durch das Fördern der Packungsbehälter (19) in der Abtransportebene (23, 24) auf eine tragende Oberfläche (33, 36) der Abtransportebene gelangt.

5. Vorrichtung zum Abtransportieren von befüllten Packungsbehältern aus einer Füllmaschine (16) für flüssiges Füllgut umfassend
- mindestens ein erstes Fördermittel (15) mit einem zwischen zwei Umlenkungen in einer Förderebene (37) umlaufenden Tragorgan zum taktweisen Fördern der Packungsbehälter (19),
- eine Hubvorrichtung (38) zum Anheben der Packungsbehälter (19) aus einer Übergabeposition (20) der Förderebene (37) in eine oberhalb der Förderebene (37) liegende Abtransportebene (23, 24) und
- mindestens ein zweites Fördermittel (39), das zum Fördern der Packungsbehälter (19) in der Abtransportebene (23, 24) in zwei entgegengesetzt verlaufende Abtransportrichtungen (45, 54) des zweiten Fördermittels (39) eingerichtet ist, wobei die Abtransportrichtungen (45, 54) quer zur Förderrichtung (25) des ersten Fördermittels (15) verlaufen **dadurch gekennzeichnet, daß** die Kubvorrichtung zwischen den Umlenkungen angeordnet ist.

6. Vorrichtung nach Anspruch 5, **dadurch gekennzeichnet, dass** die Hubvorrichtung (38) mindestens einen zwischen der Förder- und Abtransportebene (37, 23, 24) hin- und herbeweglichen Stößel (21) aufweist, der an einer Bodenfläche des Packungsbehälters (19) zur Anlage bringbar ist.

7. Vorrichtung nach Anspruch 6, **dadurch gekennzeichnet, dass** an dem Tragorgan jedes ersten Fördermittels (15) in Förderrichtung (25) hintereinander Zellen (17) zur Aufnahme jeweils eines Packungsbehälters (19) angeordnet sind, wobei durch eine Durchtrittsöffnung in jeder Zelle (17) ein Stößel (21) der Hubvorrichtung (38) zur Wirkung bringbar ist.

8. Vorrichtung nach einem der Ansprüche 5 - 7, **dadurch gekennzeichnet, dass** jedes zweite Fördermittel (39) ein zwischen zwei Umlenkungen (52, 62) umlaufendes Tragorgan aufweist, an dem mehrere Taschen (29, 30) zum formschlüssigen Erfassen der Packungsbehälter (19) befestigt sind.

9. Vorrichtung nach einem der Ansprüche 5 - 8, **dadurch gekennzeichnet, dass** in der Abtransportebene (23, 24) Gleitflächen (33, 36) angeordnet sind, die sich in die beiden Abtransportrichtungen (45, 54) erstrecken.

10. Vorrichtung nach Anspruch 9, **dadurch gekennzeichnet, dass** sich oberhalb der Übergabeposition (20) zwischen den Gleitflächen (33, 36) eine Unterbrechung (41) befindet, durch die jeder Packungsbehälter (19) mit der Hubvorrichtung (38) in die Abtransportebene (23, 24) hebbar ist.

11. Vorrichtung nach einem der Ansprüche 5 - 10, **dadurch gekennzeichnet, dass** die Vorrichtung zum Abtransportieren eine von der Hubvorrichtung (38) verschiedene Stützvorrichtung (40) zum zeitweiligen Abstützen einer Bodenfläche jedes Packungsbehälters (19) in der Abtransportebene (23, 24) aufweist.

12. Vorrichtung nach Anspruch 11, **dadurch gekennzeichnet, dass** die Stützvorrichtung (40) mindestens ein in der Abtransportebene (23, 24) zwischen einer Ausgangsposition und einer Stützposition hin- und herbewegliches Tragteil aufweist.

13. Vorrichtung nach Anspruch 10, 11 und 12, **dadurch gekennzeichnet, dass** sich das Tragteil in der Stützposition in die Unterbrechung (41) zwischen den Gleitflächen (33, 36) hinein erstreckt.

## Claims

1. Method for removing packaging containers (19) for liquid filling material from a filling machine (16) comprising the steps:
- conveying the packaging containers (19) in a conveying direction (25) in cycles by means of a carrying element of at least one first conveying means (15) which circulates in a conveying plane (37) between two deflections,
- lifting the packaging containers (19) at a transfer position (20) disposed between the deflections (52, 63) from the conveying plane (37) into a removal plane (23, 24) located above the conveying plane (37) during the standstill of the first conveying means (15),
- transferring the packaging containers (19) to at least one second conveying means (39) during the standstill of each second conveying means (39), and
- conveying the packaging containers (19) in the removal plane (23, 24) in one of two removal directions (45, 54) of each second conveying means (39) running in opposite directions, which removal directions run transversely to the conveying direction (25) of each first conveying means (15).

2. The method according to claim 1, **characterized in that** the packaging containers (19) are lifted in the perpendicular direction to the conveying plane (37).

3. The method according to claim 1 or 2, **characterized in that** the lifting of the packaging containers (19) is accomplished by means of a lifting device (38) and for transfer of the packaging containers (19) to the second conveying means (39) a base surface of each packaging container (19) is temporarily supported against sagging, after lifting into the removal plane (23, 24), by means of a supporting device (40) which is different from the lifting device (38).

4. The method according to claim 3, **characterized in that** the bottom surface of each packaging container (19) is supported by the supporting device (40) until the bottom surface reaches a bearing surface (33, 36) of the removal plane by conveying the packaging containers (19) in the removal plane (23, 24).

5. Device for removing filled packaging containers from a filling machine (16) for liquid filling material comprising
- at least one first conveying means (15) with a carrying element which circulates between two deflections in a conveying plane (37) for conveying the packaging containers (19) in cycles,
- a lifting device (38) for lifting the packaging containers (19) from a transfer position (20) of the conveying plane (37) into a removal plane (23, 24) lying above the conveying plane (37) and
- at least one second conveying means (39) which is adapted for conveying the packaging containers (19) in the transport plane (23, 24) in two oppositely running removal directions (45, 54) of the second conveying means (39), wherein the removal directions (45, 54) run transversely to the conveying direction (25) of the first conveying means (15), **characterized in that** the lifting device is disposed between two deflections.

6. The device according to claim 5, **characterized in that** the lifting device (38) comprises at least one plunger (21) which is movable to and fro between the conveying and removal plane (37, 23, 24) which can be brought to abut against a bottom surface of the packaging container (19).

7. The device according to claim 6, **characterized in that** cells (17) for receiving respectively one packaging container (19) are arranged on the carrying element of each first conveying means (15) consecutively in the conveying direction (25), wherein a plunger (21) of the lifting device (38) can be brought to act through a through-opening in each cell (17).

8. The device according to any one of claims 5-7, **characterized in that** each second conveying means (39) has a carrying element which circulates between two deflections (52, 62), to which a plurality of pockets (29, 30) for positive grasping of the packaging containers (19) are attached.

9. The device according to any one of claims 5-8, **characterized in that** sliding surfaces (33, 36) are provided in the removal plane (23, 24) which extend in both removal directions (45, 54).

10. The device according to claim 9, **characterized in that** above the transfer position (20) between the sliding surfaces (33, 36), an interruption (41) is located through which each packaging container (19) can be lifted with the lifting device (38) into the removal plane (23, 24).

11. The device according to any one of claims 5-10, **characterized in that** the device for removal has a supporting device (40) different from the lifting device (38) for temporary supporting of a bottom surface of each packaging container (19) in the removal plane (23, 24).

12. The device according to claim 11, **characterized in that** the supporting device (40) has at least one supporting part which can be moved to and fro in the removal plane (23, 24) between a starting position and a supporting position.

13. The device according to claims 10, 11 and 12, **characterized in that** the supporting part in the supporting position extends into the interruption (41) between the sliding surfaces (33, 36).

## Revendications

1. Procédé destiné à évacuer des conteneurs d'emballage (19) hors d'une machine de remplissage (16) de produits liquides, comprenant les étapes :
- convoyage cadencé des conteneurs d'emballage (19) dans une direction de convoyage (25) avec un organe porteur en révolution entre deux coudages dans un plan de convoyage (37) d'au moins un moyen de convoyage (15),
- soulèvement des conteneurs d'emballage (19) dans une position de transfert (20) placée entre les coudages (52, 63) hors du plan de convoyage (37) dans un plan d'évacuation (23, 24) situé au-dessus du plan de convoyage (37), pendant l'arrêt du premier moyen de convoyage (15),
- transfert du conteneur d'emballage (19) à au moins un deuxième moyen de convoyage (39) pendant l'arrêt de chaque deuxième moyen de convoyage (39) et
- convoyage des conteneurs d'emballage (19) dans le plan d'évacuation (23, 24) dans l'une parmi deux directions d'évacuation (45, 54) s'écoulant à l'opposée de chaque deuxième moyen de convoyage (39), qui s'écoulent à la transversale de la direction de convoyage (25) de chaque premier moyen de convoyage (15).

2. Procédé selon la revendication 1, **caractérisé en ce que** les conteneurs d'emballage (19) sont soulevés dans la direction verticale vers le plan de convoyage (37).

3. Procédé selon la revendication 1 ou la revendication 2, **caractérisé en ce que** le soulèvement des conteneurs d'emballage (19) s'effectue au moyen d'un dispositif de levage (38) et pour le transfert des conteneurs d'emballage (19) au deuxième moyen de convoyage (39), après le soulèvement dans le plan d'évacuation (23, 24), une surface de fond inférieur de chaque conteneur d'emballage (19) est soutenue par intermittence contre un affaissement au moyen d'un dispositif de soutien (40) différent du dispositif de levage (38).

4. Procédé selon la revendication 3, **caractérisé en ce que** la surface de fond inférieur de chaque conteneur d'emballage (19) est soutenue par le dispositif de soutien (40) jusqu'à ce que via la convoyage des conteneurs d'emballage (19), la surface de fond inférieur arrive dans le plan d'évacuation (23, 24) sur une surface porteuse (33, 36) du plan d'évacuation.

5. Dispositif destiné à évacuer des conteneurs d'emballage remplis hors d'une machine de remplissage (16) de produits liquides, comportant
- au moins un premier moyen de convoyage (15) avec un organe porteur en révolution entre deux coudages dans un plan de convoyage (37), pour le convoyage cadencé des conteneurs d'emballage (19),
- un dispositif de levage (38) destiné à soulever les conteneurs d'emballage (19), d'une position de transfert (20) du plan de convoyage (37) dans un plan d'évacuation (23, 24) situé au-dessus du plan de convoyage (37) et
- au moins un deuxième moyen de convoyage (39) qui est installé pour convoyer les conteneurs d'emballage (19) dans le plan d'évacuation (23, 24) dans deux directions d'évacuation (45, 54) s'écoulant à l'opposée du deuxième moyen de convoyage (39), les directions d'évacuation (45, 54) s'écoulant à la transversale de la direction de convoyage (25) du premier moyen de convoyage (15), **caractérisé en ce que** le dispositif de levage est placé entre les coudages.

6. Dispositif selon la revendication 5, **caractérisé en ce que** le dispositif de levage (38) comporte au moins un coulisseau (21) déplaçable en va et vient entre le plan de convoyage et le plan d'évacuation (37, 23, 24), qui peut être amené en appui contre une surface de fond inférieur du conteneur d'emballage (19).

7. Dispositif selon la revendication 6, **caractérisé en ce que** sur l'organe porteur de chaque premier moyen de convoyage (15), dans la direction de convoyage (25) sont placées les unes derrière les autres des cellules (17) destinées à recevoir chacune un conteneur d'emballage (19), à travers une ouverture d'entrée dans chaque cellule (17), un coulisseau (21) du dispositif de levage (38) étant susceptible d'être amené en action.

8. Dispositif selon l'une quelconque des revendications 5 à 7, **caractérisé en ce que** chaque deuxième moyen de convoyage (39) comporte un organe porteur en révolution entre deux coudages (52, 62) sur lequel sont fixées plusieurs poches (29, 30) pour la saisie par complémentarité de forme des conteneurs d'emballage (19).

9. Dispositif selon l'une quelconque des revendications 5 à 8, **caractérisé en ce que** dans le plan d'évacuation (23, 24) sont placées des surfaces de glissement (33, 36) qui s'étendent dans les deux directions d'évacuation (45, 54).

10. Dispositif selon la revendication 9, **caractérisé en ce qu'**au-dessus de la position de transfert (20), entre les surfaces de glissement (33, 36) se trouve une interruption (41) à travers laquelle chaque conteneur d'emballage (19) peut être soulevé par le dispositif de levage (38) dans le plan d'évacuation (23, 24).

11. Dispositif selon l'une quelconque des revendications 5 à 10, **caractérisé en ce que** le dispositif d'évacuation comporte un dispositif de soutien (40) différent du dispositif de levage (38) pour le soutien intermittent d'une surface de fond inférieur de chaque conteneur de transport (19) dans le plan d'évacuation (23, 24).

12. Dispositif selon la revendication 11, **caractérisé en ce que** le dispositif de soutien (40) comporte au moins une pièce porteuse déplaçable en va et vient dans le plan d'évacuation (23, 24) entre une position initiale et une position de soutien.

13. Dispositif selon la revendication 10, la revendication 11 et la revendication 12, **caractérisé en ce que** dans la position de soutien, la pièce porteuse s'étend à l'intérieur de l'interruption (41) entre les surfaces de glissement (33, 36).
